# EUROPÄISCHE PATENTSCHRIFT

(11) **EP 2 766 196 B1**
(45) Veröffentlichungstag und Bekanntmachung des Hinweises auf die Patenterteilung: **14.12.2016**
(21) Anmeldenummer: 12767018.0
(22) Anmeldetag: 04.10.2012
(51) Int. Cl.: B60B 39/02, B60B 39/08, B61C 15/10

(54) **VERFAHREN UND VORRICHTUNG ZUM REDUZIEREN VON SANDBRÜCKEN IN EINEM STREUMITTELBEHÄLTER**
METHOD AND DEVICE FOR REDUCING SAND BRIDGES IN A GRIT CONTAINER
PROCÉDÉ ET DISPOSITIF PERMETTANT DE RÉDUIRE LES PONTS DE SABLE DANS UN RÉSERVOIR DE PRODUIT D'ÉPANDAGE

(30) Priorität: 10.10.2011 DE 102011115380
(43) Veröffentlichungstag der Anmeldung: 20.08.2014
(73) Patentinhaber: KNORR-BREMSE Systeme für Schienenfahrzeuge GmbH, 80809 München (DE)
(72) Erfinder: WASSERMANN, Johann, A-1210 Wien (AT)
(86) Internationale Anmeldenummer: PCT/EP2012/069654
(87) Internationale Veröffentlichungsnummer: WO 2013/053636

(56) Entgegenhaltungen:
- DE-A1- 3 410 409
- GB-A- 510 299
- GB-A- 613 409
- US-A- 3 345 098

## Beschreibung

Die vorliegende Erfindung betrifft eine Vorrichtung zum Reduzieren von Sandbrücken in einem Streumittelbehälter einer Sandungsanlage für ein Schienenfahrzeug und eine Sandungsanlage mit der Vorrichtung. Eine Vorrichtung gemäß dem Oberbegriff des Anspruchs 1 ist aus der DE 34 10 409 A1 bekannt.

Aus den Druckschriften AT 507 381 B1, US 1,404,903, US 3,345,098 A, GB 510,299 A, GB 613,409 A und GB 190,872 sind Vorrichtungen zum Auflockern von Streumittel, wie beispielsweise Sand, in Sandungsanlagen eines Schienenfahrzeuges bekannt, die eingerichtet sind, das Streumittel zur Adhäsionssteigerung zwischen einem Rad des Schienenfahrzeuges und einer das Schienenfahrzeug tragenden Schiene auf die Schiene auszustreuen.

Im Rahmen der AT 507 381 B1 wird vorgeschlagen, in einer schwerkraftbasierten Sandungsanlage ein Verschlusselement gegen eine Auslauföffnung schlagen zu lassen, um so mittels der erzeugten Vibrationen das Streumittel aufzulockern.

In der US 1,404,903 und GB 190,872 wird vorgeschlagen, in einer pneumatischen Sandungsanlage mit Druckluft einen Schirm, der ein die Auslauföffnung bildendes Fallrohr für das Streumittel überdeckt, kurzzeitig gegen die Fallrichtung zu drücken, und so ebenfalls das Streumittel aufzulockern.

Es ist Aufgabe der vorliegenden Erfindung die bekannten Vorrichtungen zum Auflockern von Streumittel in Sandungsanlagen eines Schienenfahrzeuges zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt umfasst ein Verfahren zum Reduzieren von Sandbrücken in einem Streumittelbehälter einer Sandungsanlage für ein Schienenfahrzeug, die ausgebildet ist, ein in dem Streumittelbehälter aufgenommenes Streumittel über ein Fallrohr auf eine das Schienenfahrzeug tragende Schiene zu streuen den Schritt Auflockern des Streumittels basierend auf einer winklig zum Fallrohr ausgerichteten Auflockerungskraft.

Dem angegebenen Verfahren liegt die Überlegung zugrunde, dass bei der Ausstreuung von Streumitteln auf ein Schiene beispielsweise basierend auf einem pneumatischem Sandungsprinzip oder einem schwerkraftbasierten Sandungsprinzip ein sogenanntes Sandungsversagen auftreten kann, bei der trotz Ansteuerung einer Sandungseinrichtung keine oder eine verringerte Abgabe an Streumittel erfolgt.

Dem angegebenen Verfahren liegt weiter die Überlegung zugrunde, dass die Ursache für dieses Sandungsversagen, die Bildung von Sandverfestigungen und/oder die Ausbildung einer sehr feinen, glatten Oberfläche in oder in der Nähe einer Ansaugöffnung der Sandungseinrichtung sein könnte, was nachstehend als Sandbrücke bezeichnet werden soll. Die Ursache derartiger Sandbrücken kann ein hoher lokaler oder genereller Staubanteil im Streumittel (meist in Verbindung mit auf das Streumittel einwirkenden Beschleunigungen und/oder Vibrationen) und/oder die Folge von Feuchte und/oder elektrostatischen Effekten sein. Ein hoher prozentueller genereller Staubanteil kann beim Einsatz von großen Sandfüllanlagen im Zuge der Entnahme aus dem Sandcontainer beziehungsweise dem Füllvorgang des jeweiligen Sandkastens entstehen. Zu einer lokalen Erhöhung des Staubanteils, speziell im unteren Bereich des Sandkastens - also im Bereich der Sandungseinrichtung und damit der Ansaugöffnung - kann es infolge betrieblicher Vibrationen des Sandkastens, eingeleitet über das Portal, aufgrund von Unebenheiten der Schienen, Stoßstellen, Kurvenfahrten oder Beschleunigungen und Verzögerungen kommen.

Dem angegebenen Verfahren liegt ferner die Überlegung zugrunde, dass die Sandbrücken zum Auflockern des Sandes zerstört oder zumindest reduziert werden müssten. Basierend auf dieser Überlegung wird im Rahmen des angegebenen Verfahrens erkannt, dass die eingangs genannten Vorrichtungen zum Auflockern von Streumittel derartige Sandbrücken nicht auflösen können, da sie alle entlang der Richtung der zuvor genannten betrieblichen Vibrationen des Sandkastens wirken und so das Streumittel in diesem Fall sogar noch verfestigen können.

Zur Vermeidung dieser Verfestigungen sollte die Lockerung des Sandes in einer anderen Richtung als die Fallrichtung durchgeführt werden. Daher ist es Idee des angegebenen Verfahrens, das Streumittel nicht in oder entgegen der Richtung des Fallrohres sondern winklig dazu aufzulockern.

In einer Weiterbildung des Verfahrens wird zum Auflockern des Streumittels ein mechanisches Bauteil über die Auflockerungskraft bewegt. Dieses mechanische Bauteil kann jedes beliebige Bauteil sein, das das Streumittel basierend auf der Auflockerungskraft bewegen kann. So können als mechanisches Bauteil sowohl rotatorisch wirkende Rührmittel wie Krallen, Stäbe oder Schaufeln als auch linear wirkende Wälzmittel eingesetzt werden. Das mechanische Bauteil sollte vorzugsweise in der Nähe einer Ansaugöffnung zum Fallrohr angeordnet werden, damit die Auflockerung des Streumittels unmittelbar dort wirkt, wo das Streumittel aus dem Streumittelbehälter entnommen wird.

In einer besonderen Weiterbildung des angegebenen Verfahrens wird das mechanische Bauteil zum Auflockern des Streumittels basierend auf der Auflockerungskraft vibriert. Die Vibration, die im Rahmen des angegebenen Verfahrens winklig zum Fallrohr wirkt, löst die Sandbrücken besonders effektiv und kann global, beispielsweise am Streumittelbehälter oder auch lokal, beispielsweise am Fallrohr angreifen.

Gemäß einem Aspekt der Erfindung umfasst eine Vorrichtung zum Reduzieren von Sandbrücken in einem Streumittelbehälter einer Sandungsanlage für ein Schienenfahrzeug, die ausgebildet ist, ein in dem Streumittelbehälter aufgenommenes Streumittel über ein Fallrohr auf eine das Schienenfahrzeug tragende Schiene zu streuen, eine Auflockerungsvorrichtung, die zum Auflockern des Streumittels basierend auf einer winklig zum Fallrohr ausgerichteten Auflockerungskraft eingerichtet ist. Die angegebene Vorrichtung umfasst das Fallrohr und einen in einer Fallrichtung des Streumittels betrachtet oberhalb am Fallrohr befestigten Ansaugkopf zum Ansaugen des Streumittels, wobei die Auflockerungsvorrichtung zum Auflockern des Streumittels basierend auf einer Bewegung des Fallrohres vorgesehen ist. Damit könnte das angegebene Verfahren in einem Streumittelbehälter platzsparend durchgeführt werden, da das mechanische Bauteil zum Zerstören oder Reduzieren der Sandbrücken in das Fallrohr integriert ist.

In einer besonderen Weiterbildung der angegebenen Vorrichtung ist das Fallrohr in Fallrichtung des Streumittels betrachtet unterhalb des Ansaugkopfes eingeschnürt. Über die Einschnürung kann das Fallrohr durch die Vibration besonders einfach bewegt werden, sodass die Auflockerung des Streumittels unterstützt wird.

In einer anderen Weiterbildung der angegebenen Vorrichtung ist die Auflockerungsvorrichtung am Ansaugkopf befestigt: Die Auflockerungskraft, die am sich am Ende des Fallrohres befindenden Ansaugkopf angreift, wird durch eine entsprechende Hebelwirkung verstärkt. Insbesondere mit der Einschnürung im Fallrohr kann eine besonders effiziente Auflockerungswirkung erreicht werden.

In einer besonderen Weiterbildung der angegebenen Vorrichtung umfasst die Auflockerungsvorrichtung einen Prallkörper, der basierend auf der Auflockerungskraft gegen eine Prallwand schlagbar ist.

In einer alternativen oder zusätzlichen Weiterbildung der angegebenen Vorrichtung umfasst die Auflockerungsvorrichtung einen Extenderkörper, der exzentrisch um eine Rotationsachse und basierend auf der Auflockerungskraft drehbar gelagert ist.

Gemäß einem weiteren Aspekt der Erfindung umfasst eine Sandungsanlage für ein Schienenfahrzeug einen ein Streumittel haltenden Streumittelbehälter, ein Fallrohr zur Ausgabe des Streumittels auf eine das Schienenfahrzeug tragende Schiene, und eine angegebene Vorrichtung zum Auflockern des Streumittels basierend auf einer winklig zum Fallrohr ausgerichteten Auflockerungskraft.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- Fig. 1: eine schematische Darstellung einer Sandungsanlage,

Fig. 2a und 2b eine schematische Darstellung einer ersten Vibrationseinrichtung, und

Fig. 3a und 3b eine schematische Darstellung einer zweiten Vibrationseinrichtung zeigen.

In den Figuren werden gleiche technische Elemente mit gleichen Bezugszeichen versehen und nur einmal beschrieben.

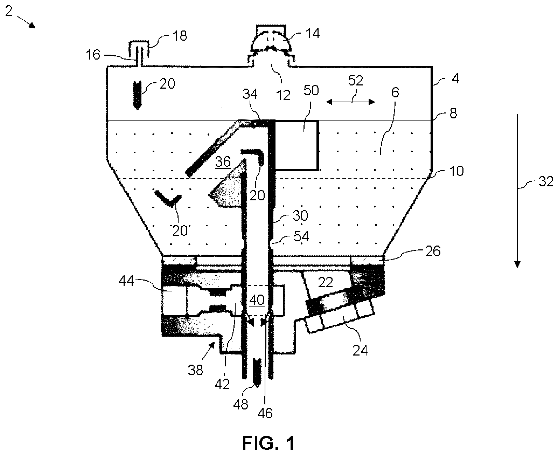

Es wird auf Fig. 1 Bezug genommen, die eine schematische Ansicht einer Sandungsanlage 2 zeigt.

Die Sandungsanlage 2 weist einen Behälter 4 auf, in welchem ein Streumittel in Form eines Sandes 6 mit einem Füllstand 8 aufgenommen ist. Gestrichelt dargestellt ist zusätzlich ein minimaler Füllstand 10 für den Sand 6, der nicht unterschritten werden sollte. Der Behälter 4 weist ferner eine Öffnung 12 auf, die mit einem Deckel 14 verschlossen ist und über die der Sand 6 in den Behälter 4 eingefüllt werden kann. An der Oberseite des Behälters 4 eine Ansaugöffnung 16 mit einem Ansaugfilter 18 vorgesehen, über die Außenluft 20 in den Behälter 4 angesaugt werden kann. Im Bodenbereich des Behälters 4 ist eine weitere Öffnung 22 mit einer abschraubbaren Abdeckung 24 zur Einführung einer nicht weiter dargestellten Heizeinrichtung zum Heizen des Sandes 6 im Behälter 4 ausgebildet. Im Bodenbereich des Behälters 4 ist ferner eine Bodenplatte 26 angeordnet, die in der vorliegenden Ausführung zur Befestigung einer noch zu beschreibenden Ansaugvorrichtung verwendet werden kann. Die Bodenplatte 26 kann einteilig mit den Wänden des Behälters 4 oder getrennt von diesen ausgebildet sein.

Durch die Bodenplatte 26 ist eine Durchgangsöffnung 28 geführt auf, durch welche ein Fallrohr 30 geführt ist. Am in einer Fallrichtung 32 des Fallrohres 30 gesehenen oberen Ende ist ein Ansaugkopf 34 angeordnet. Im Betrieb der Sandungsanlage 2 tritt die Außenluft 20 über eine Ansaugöffnung 36 im Ansaugkopf 34 in das Fallrohr 30 ein und reißt dabei einen Teil des Sandes 6 mit sich.

Angesaugt wird die Außenluft 20 dabei mit einer in ihrer Funktion an sich bekannten Venturidüse 38 oder durch die beispielhaft dargestellten Ejektordüsen 40. In der Sandungsanlage 2 umfassen die Ejektordüsen 40 einen Teil des Fallrohres 30, der in Fallrichtung 32 gesehen im unteren Bereich des Fallrohres angeordnet und in Fig. 1 durch gestrichelte Linien angedeutet ist und einen diesen Teil 40 des Fallrohres 30 umgebenden Druckluftraum 42. An den Druckluftraum 42 kann über einen Druckluftanschluss 44 eine Quelldruckluft 46 angelegt werden, die durch die zuvor genannten nicht näher referenzierten Bohrungen (das sind Ejektordüsen 40, die einen Unterdruck erzeugen und damit die Ansaugung von Umgebungsluft bewirken) strömt und in Fallrichtung 32 gesehen im Bereich oberhalb des Teils 40 des Fallrohres 30 in bekannter Weise einen Unterdruck erzeugt. Dieser Unterdruck wird durch die anströmende Außenluft 20 ausgeglichen, die dann wie bereits erwähnt den Sand 6 mitreißt. Der minimale Sandstand 10 sollte demnach so gewählt sein, dass die Ansaugöffnung 36 stets mit Sand 6 bedeckt ist, so dass die Außenluft 20 nicht einfach zwischen dem Sand 6 und einer Wandung der Ansaugöffnung 36 vorbeitunnelt, ohne den Sand 6 mitzureißen. Die Summenluft 48 aus der Quelldruckluft 46 und der Außenluft 20 tritt dann zusammen mit dem Sand 6 aus dem in Fallrichtung 32 gesehenen unteren Ende des Fallrohres 30 aus.

Damit der Sand 6 in der zuvor beschriebenen Weise durch die Außenluft 20 mitgerissen werden kann, muss der Sand locker im Behälter 4 liegen. Dies ist jedoch nicht immer gewährleistet. Es kann beispielsweise vorkommen, dass sich durch elektrostatische Aufladung des Sandes 6 oder durch Verkeilen grobkörniger Partikel im Sand 6 sogenannte Sandbrücken ausbilden, bei denen es sich um stabile Sandoberflächen innerhalb der Ansaugöffnung 36 und/oder des Fallrohres 30 oder um Verfestigungen des Sandes 6 um die Ansaugöffnung 36 herum handelt. Es hat sich gezeigt, dass der Sand 6 besonders dann dazu neigt, diese Verfestigungen und stabilen Sandoberflächen auszubilden, wenn er einen vergleichsweise hohen Staubanteil aufweist. Unter Staub sollen nachstehend Partikel im Sand 6 verstanden werden, die einen Durchmesser von kleiner als 0,4 mm, jedenfalls aber einen Durchmesser von kleiner als 0,1 mm aufweisen.

Um die zuvor genannten Sandbrücken in Form von Verfestigung und stabilen Sandoberflächen des Sandes 6 zu reduzieren, umfasst die Sandungsanlage 2 in der vorliegenden Ausführung eine Auflockerungseinrichtung in Form einer Vibrationseinrichtung 50. Diese bewegt den Ansaugkopf 34 mittels Vibrationskräften in eine Vibrationsrichtung 52, die in der vorliegenden Ausführung rechtwinklig zur Fallrichtung 32 steht. Prinzipiell kann die Vibrationsrichtung 52 der Vibrationskräfte in einem beliebigen Winkel zur Fallrichtung 32 stehen. Vibrationen in Fallrichtung 32 sollten jedoch nicht gewählt werden, da diese den Sand 6 eher weiter verfestigen, als lockern. Der Winkel sollte daher ausreichend groß bemessen sein, damit sich durch die Vibrationen keine Verfestigungen des Sandes 6 ergeben.

Die Vibrationseinrichtung 50 kann beispielsweise am Ansaugkopf 34 verschraubt, verschweißt oder an diesen angeclipst sein.

Zur Unterstützung der Vibration des Ansaugkopfes 34 kann das Fallrohr 30 in der vorliegenden Ausführung zwischen der Bodenplatte 26 und der Vibrationseinrichtung 50 eine Einschnürung 54 aufweisen. Bei der Einschnürung 54 handelt es sich in der vorliegenden Ausführung um eine Außenradiusverjüngung des Fallrohres 30. Diese Einschnürung 54 dient als Biegestelle des Fallrohres 30, um die der Ansaugkopf 34 durch die Vibrationseinrichtung 34 angeregt hin- und herschwingen kann. Die Einschnürung 54 kann applikationsabhängig an jeder beliebigen Stelle des Fallrohres 30 über der Befestigung mit dem Boden des Behälters 4 angeordnet sein. Je näher die Einschnürung 54 an der Vibrationseinrichtung 50 angeordnet ist, desto größer ist zwar Ihre Wirkung auf die Vibrationen des Ansaugkopfes 34, jedoch wird der Vibrationsradius des Ansaugkopfes dadurch eingeschränkt.

Alternativ oder zusätzlich zur Einschnürung 54 kann der Ansaugkopf 34 mit einer Bohrung ausgestattet sein, die einen Innendurchmesser aufweist, der größer ist, als der Außendurchmesser des Fallrohres 30. Somit kann der Ansaufkopf 34 auf einen kleinen axialen Endbereich des Fallrohres 30 aufgesteckt werden. Ein verbleibender Hohlraum kann dann mit einer luftdichten dauerelastischen Masse ausgefüllt werden.

Zur Erzeugung der Vibrationen kann die Vibrationseinrichtung 50 beliebig ausgebildet sein.

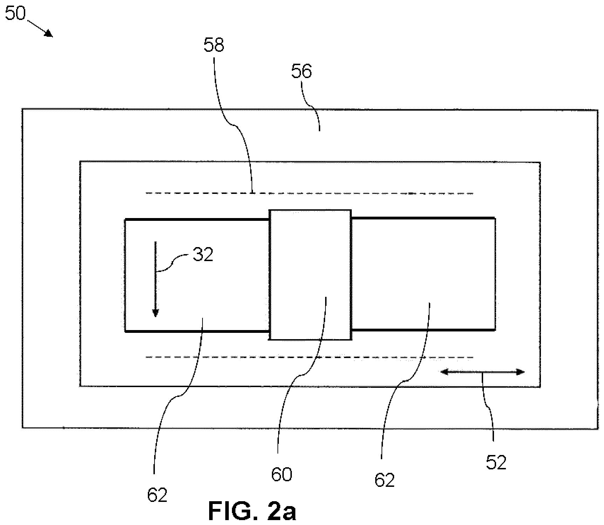

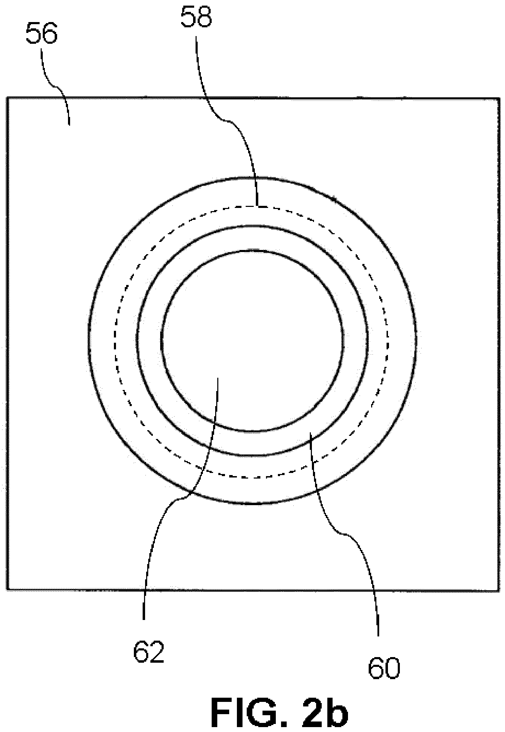

Es wird auf die Fig. 2a und 2b Bezug genommen, die in einer schematischen Darstellung eine erste mögliche Vibrationseinrichtung 50 zeigen. Dabei zeigt Figur 2a die Vibrationseinrichtung 50 in einem seitlichen Querschnitt und Figur 2b die Vibrationseinrichtung 50 in einer Vorderansicht.

Die Vibrationseinrichtung 50 weist ein Gehäuse 56 auf, in dem eine elektrisch bestrombare Zylinderspule 58 aufgenommen ist. Axial beweglich in der Zylinderspule 58 ist ein Permanentmagnet 60 angeordnet, an dessen axialen Enden je eine Zusatzmasse 62 befestigt ist. Weist der Permanentmagnet 60 selbst eine ausreichend große Masse auf, können die Zusatzmassen 62 auch entfallen.

Wird die Zylinderspule 58 bestromt, führt das in einer dem Fachmann bekannten Weise zu einer axialen Bewegung des Permanentmagneten 60 mit den Zusatzmassen, deren Richtung 52 von der Stromrichtung der Bestromung abhängig ist. Die axiale Bewegung wird durch einen Anschlag der in Bewegungsrichtung gesehenen vorderen Zusatzmasse 62 gegen das Gehäuse 56 gestoppt. Wird die Zylinderspule 58 daher mit einem Wechselstrom ausreichender Amplitude bestromt, werden der Permanentmagnet 60 axial hin- und herbewegt und die Zusatzmassen 62 abwechselnd gegen das Gehäuse 56 geschlagen.

Dadurch werden Vibrationen des Gehäuses 40 erzeugt. Zum Besseren Verständnis der Vibrationsbewegungen ist in Fig. 2a die Fallrichtung 32 aus Fig. 1 angedeutet.

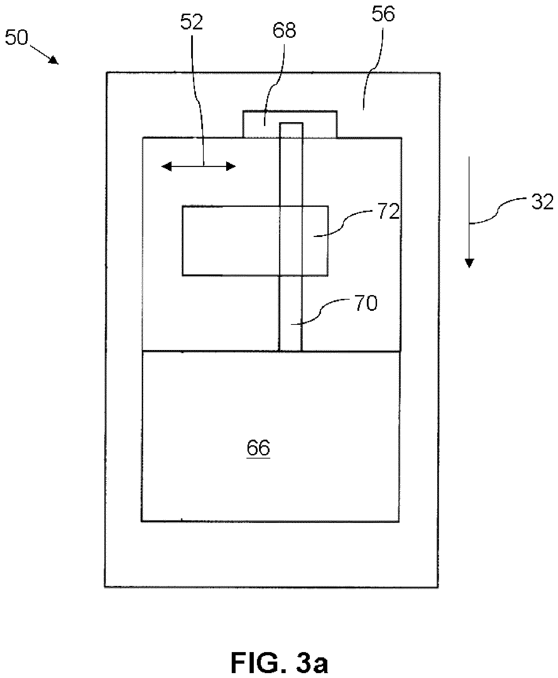

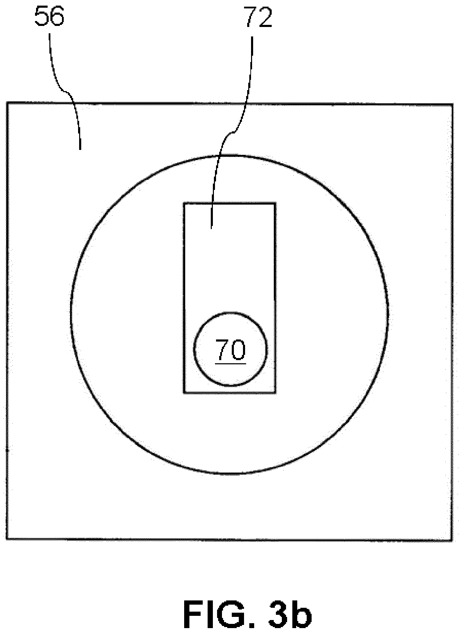

Es wird auf die Fig. 3a und 3b Bezug genommen, die in einer schematischen Darstellung eine zweite mögliche Vibrationseinrichtung 50 zeigen. Dabei zeigt Figur 3a die Vibrationseinrichtung 50 in einem seitlichen Querschnitt und Figur 3b die Vibrationseinrichtung 50 in einer Vorderansicht.

In Anlehnung an die erste mögliche Vibrationseinrichtung 50 aus den Fig. 2a und 2b weist die zweite mögliche Vibrationseinrichtung 50 ebenfalls ein Gehäuse 56 auf, wobei dieses Mal in dem Gehäuse 56 ortsfest ein Elektromotor 66 aufgenommen ist. Mit dem Elektromotor 66 wird eine über ein Lager 68 im Gehäuse 56 gelagerte Welle 70 rotierend angetrieben.

An der Welle 70 ist ortsfest eine Extendermasse 72 befestigt. Auf diese Weise ist eine Unwucht geschaffen, die beim Drehen der Extendermasse 58 durch den Elektromotor 66 ebenfalls Vibrationen hervorruft.

Basierend auf der Rotation der Extendermasse 72 vibriert die Vibrationseinrichtung 50 radial zur Welle 70. Durch dieses radial zur Welle 70 ausgerichtete Vibrieren der Vibrationseinrichtung kann die Welle 70 selbst in jeder beliebigen Lage zur Fallrichtung 32 eingebaut werden, da die Vibrationen der Vibrationseinrichtung 50 in jedem Fall Richtungen 52 umfassen, die winklig zur Fallrichtung 32 ausgerichtet sind.

Besonders bevorzugt sollte die Welle 70 jedoch nicht rechtwinklig, insbesondere parallel zur Fallrichtung 32 ausgerichtet werden, da in diesem Fall alle Vibrationsbewegungen der Vibrationseinrichtung 50 winklig zur Fallrichtung 32 ausgerichtet wären

## Patentansprüche

1. Vorrichtung zum Reduzieren von Sandbrücken in einem Streumittelbehälter (4) einer Sandungsanlage (2) für ein Schienenfahrzeug, die ausgebildet ist, ein in dem Streumittelbehälter (4) aufgenommenes Streumittel (6) über ein Fallrohr (30) auf eine das Schienenfahrzeug tragende Schiene zu streuen, umfassend eine Auflockerungsvorrichtung (50), die zum Auflockern des Streumittels (6) basierend auf einer winklig zum Fallrohr (30) ausgerichteten (52) Auflockerungskraft eingerichtet ist, und das Fallrohr (30), **gekennzeichnet durch**
einen in einer Fallrichtung (32) des Streumittels (6) betrachtet oberhalb am Fallrohr (30) befestigten Ansaugkopf (34) zum Ansaugen des Streumittels (6), wobei die Auflockerungsvorrichtung (50) zum Auflockern des Streumittels (6) basierend auf einer Bewegung (52) des Fallrohres (30) vorgesehen ist.

2. Vorrichtung nach Anspruch 1, wobei das Fallrohr (30) in Fallrichtung (32) des Streumittels (6) betrachtet unterhalb des Ansaugkopfes (34) eingeschnürt (54) ist.

3. Vorrichtung nach Anspruch 2 oder 3, wobei die Auflockerungsvorrichtung (50) am Ansaugkopf (34) befestigt ist.

4. Vorrichtung nach einem der vorstehenden Ansprüche, wobei die Auflockerungsvorrichtung (50) einen Prallkörper (60) umfasst, der basierend auf der Auflockerungskraft gegen eine Prallwand (56) schlagbar ist.

5. Vorrichtung nach einem der vorstehenden Ansprüche, wobei die Auflockerungsvorrichtung (50) einen Extenderkörper (72) umfasst, der exzentrisch um eine Rotationsachse (70) und basierend auf der Auflockerungskraft drehbar gelagert ist.

6. Vorrichtung nach einem der vorstehenden Ansprüche, wobei die Auflockerungsvorrichtung (50) derart ausgebildet ist, dass zum Auflockern des Streumittels (6) ein mechanisches Bauteil (60, 72) über die Auflockerungskraft bewegt wird.

7. Vorrichtung nach einem der vorstehenden Ansprüche, wobei die Auflockerungsvorrichtung (50) derart ausgebildet ist, dass das mechanische Bauteil (60, 72) zum Auflockern des Streumittels (6) basierend auf der Auflockerungskraft vibriert wird.

8. Sandungsanlage (2) für ein Schienenfahrzeug umfassend, einen ein Streumittel (6) haltenden Streumittelbehälter (4), ein Fallrohr (30) zur Ausgabe des Streumittels (6) auf eine das Schienenfahrzeug tragende Schiene, und eine Vorrichtung nach einem der vorstehenden Ansprüche, zum Auflockern des Streumittels (6) basierend auf einer winklig zum Fallrohr (30) ausgerichteten (52) Auflockerungskraft.

## Claims

1. Device for reducing sand bridges in a grit container (4) of a sanding installation (2) for a rail vehicle, which sanding installation is designed to spread grit (6) accommodated in the grit container (4), via a downpipe (30), onto a rail carrying the rail vehicle, comprising a loosening device (50) which is designed for loosening the grit (6), based on a loosening force oriented (52) at an angle to the downpipe (30), and the downpipe (30),
**characterized by**
an intake head (34) for the intake of the grit (6), said intake head being fastened above the downpipe (30) as seen in a falling direction (32) of the grit (6), the loosening device (50) being provided for loosening the grit (6), based on a movement (52) of the downpipe (30).

2. Device according to Claim 1, the downpipe (30) being contracted (54) below the intake head (34), as seen in the falling direction (32) of the grit (6).

3. Device according to Claim 2 or 3, the loosening device (50) being fastened to the intake head (34).

4. Device according to one of the preceding claims, the loosening device (50) comprising an impact body (60) which, based on the loosening force, can be knocked against an impact wall (56).

5. Device according to one of the preceding claims, the loosening device (50) comprising an extender body (72) which is mounted so as to be rotatable, based on the loosening force, eccentrically about an axis of rotation (70).

6. Device according to one of the preceding claims, the loosening device (50) being designed in such a way that a mechanical component (60, 72) is moved via the loosening force in order to loosen the grit (6).

7. Device according to one of the preceding claims, the loosening device (50) being designed in such a way that the mechanical component (60, 72) is vibrated, based on the loosening force, in order to loosen the grit (6).

8. Sanding installation (2) for a rail vehicle, comprising a grit container (4) holding grit (6), a downpipe (30) for dispensing the grit (6) onto a rail carrying the rail vehicle, and a device according to one of the preceding claims for loosening the grit (6), based on a loosening force oriented (52) at an angle to the downpipe (30).

## Revendications

1. Dispositif à réduire les ponts de sable dans un réservoir de matériau d'épandage (4) d'une sablière (2) pour un véhicule ferroviaire, qui est conçu à répandre un matériau d'épandage (6), qui est contenu dans ledit réservoir de matériau d'épandage (4), via un tuyau de descente (30) sur un rail portant le véhicule ferroviaire, comprenant un dispositif d'ameublissement (50) aménagé pour l'ameublissement dudit matériau d'épandage (6) en se basant sur une force d'ameublissement orientée (52) à un angle par rapport audit tuyau de descente (30), ainsi que ledit tuyau de descente (30),
**caractérisé par**
un collecteur d'aspiration (34), qui, vue en direction de descente (32) dudit matériau d'épandage, est fixé au-dessus dudit tuyau de descente (30) pour l'aspiration dudit matériau d'épandage (6), audit dispositif d'ameublissement (50) étant disposé pour l'ameublissement dudit matériau d'épandage (6) en se basant sur un mouvement (52) dudit tuyau de descente (30).

2. Dispositif selon la revendication 1, dans lequel, vu en direction de descente (32) dudit matériau d'épandage (6), ledit tuyau de descente (30) est étranglé au-dessous dudit collecteur d'aspiration (34).

3. Dispositif selon la revendication 2 ou 3, dans lequel ledit dispositif d'ameublissement (50) est fixé audit collecteur d'aspiration (34).

4. Dispositif selon une quelconque des revendications précédentes, dans lequel ledit dispositif d'ameublissement (50) comprend un corps d'impact (60), qui est apte à être frappé contre une paroi déflectrice (56), en se basant sur ladite force d'ameublissement (50).

5. Dispositif selon une quelconque des revendications précédentes, dans lequel ledit dispositif d'ameublissement (50) comprend un corps d'extension (72), qui est logé excentriquement et de manière rotative autour un axe de rotation (70), en se basant sur ladite force d'ameublissement.

6. Dispositif selon une quelconque des revendications précédentes, dans lequel ledit dispositif d'ameublissement (50) est conçu de façon, qu'un composant mécanique (60, 72) soit déplacé moyennant ladite force d'ameublissement afin d'ameublir ledit matériau d'épandage (6).

7. Dispositif selon une quelconque des revendications précédentes, dans lequel ledit dispositif d'ameublissement (50) a une configuration telle que ledit composant mécanique (60, 72) pour l'ameublissement dudit matériau d'épandage (6) subit une vibration, en se basant sur ladite force d'ameublissement.

8. Sablière (2) pour un véhicule ferroviaire, comprenant un réservoir de matériau d'épandage (4), un tuyau de descente (30) pour la décharge dudit matériau d'épandage (6) sur un rail portant le véhicule ferroviaire, et un dispositif selon une quelconque des revendications précédentes, pour l'ameublissement dudit matériau d'épandage (6), en se basant sur une force d'ameublissement orientée (52) à un angle par rapport audit tuyau de descente (30).
